# EUROPEAN PATENT SPECIFICATION

(11) **EP 2 813 775 B1**
(45) Date of publication and mention of the grant of the patent: **27.03.2019**
(21) Application number: 12867061.9
(22) Date of filing: 12.11.2012
(51) Int. Cl.: B01D 53/26, D06F 58/00, D06F 58/28, F24F 3/14, F24F 11/30, F24F 110/10, F24F 110/20

(54) **DEHUMIDIFIER**
ENTFEUCHTER
DÉSHUMIDIFICATEUR

(30) Priority: 31.01.2012 JP 2012017672
(43) Date of publication of application: 17.12.2014
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: NISHIDA, Yuka, Saitama 369-1295 (JP); KABETA, Noriyoshi, Tokyo 102-0073 (JP); ARAI, Satoshi, Tokyo 102-0073 (JP); SHIBATA, Hideo, Saitama 369-1295 (JP); FUJITA, Yoshiyuki, Saitama 369-1295 (JP)
(74) Representative: Pfenning, Meinig & Partner mbB
(86) International application number: PCT/JP2012/079272
(87) International publication number: WO 2013/114700

(56) References cited:
- DE-A1-102005 055 411
- JP-A- 2006 220 405
- JP-A- 2007 240 100
- JP-A- 2008 188 509
- JP-A- 2009 097 766
- JP-A- 2009 131 786
- JP-A- 2009 247 469
- JP-A- 2011 080 667
- JP-A- 2011 149 693
- JP-A- 2011 190 980
- JP-A- 2011 214 825
- US-A- 5 755 041

## Description

### Technical Field

The present invention relates to a dehumidifier which removes the moisture in a room, and in particular to a dehumidifier having the function of drying laundry, which refers to objects that are to be dried and hung in a room.

### Background Art

There is a conventional dehumidifier in which control means makes a comparison between temperature detection results obtained by infrared detection means and room atmosphere temperature detection results obtained by temperature detection means, whereby a sensible heat decrease due to the evaporation of the moisture absorbed by objects to be dried is recognized and the location where a temperature distribution lower than the room temperature is present is determined to be the placement range of the objects to be dried (refer to Patent Literature 1, for example).

JP 2011190 980 A discloses a dehumidifier comprising dehumidification means which removes moisture contained in the air, an air blowing means which suctions the air in a room and blows out into the room dry air obtained by causing the suctioned air to pass through the dehumidification means, wind direction changing means which changes a blowing direction of the dry air, temperature detection means which detects a temperature of the room air, surface temperature detection means which detects surface temperatures in the room, and control means which controls the dehumidification means, the air blowing means, and the wind direction changing means and the surface temperature detection means, wherein it is determined from surface temperatures detected by the surface temperature detection means that there is an object to be dried and a position where the object to be dried is placed.

JP 2008 188 509 A refers to a dehumidifying apparatus which comprises a cold air blow-off port for blowing off cold air which is dehumidified by ventilating the air to be dehumidified by a blower to an evaporator and is colder than a suction temperature, a hot air blow-off port for blowing off the air of a temperature higher than the suction temperature by ventilating the supply air to a condenser, and a display means by a cold air blow-off port LED and a hot air blow-off port LED.

JP 2009 247 469 A shows to a dehumidifier for drying clothes, wherein a drying schedule is established and measured values are compared with the schedule. The dehumidifying capability is increased/decreased according to the comparison result.

JP 2011 08 0667 A describes an air conditioner wherein a remote control device can select any human body sensing area out of human body sensing areas. Area sensing information from an infrared ray sensor is displayed on a display part of the remote control device.

DE 10 2005 055 411 A1 discloses a dehumidifier for drying at least one object in a drying space, including a heater for heating the drying space, a temperature sensor for sensing the surface temperature of the object, and a control unit for controlling the heater depending on the surface temperature.

### Citation List

### Patent Literature

Patent Literature 1: Japanese Patent Laid-Open No. 2007-240100 (Claims, Figures 3 to 5)

### Summary of Invention

### Technical Problem

The above-described conventional dehumidifier has the problem that a user doesn't know whether the placement range of objects to be dried is capable of being rightly detected and recognized.

The present invention was made in order to solve the problem described above, and the object of the present invention is to obtain a dehumidifier in which by indicating the placement range of an object to be dried, a user can ascertain that the object to be dried has been detected and recognized.

### Means for Solving the Problems

A dehumidifier according to the present invention is defined in independent claim 1 and comprises: dehumidification means which removes moisture contained in the air; an air blowing means which suctions the air in a room and blows out into the room dry air obtained by causing the suctioned air to pass through the dehumidification means; wind direction changing means which changes a blowing direction of the dry air; wherein the whole area within a range to which the wind direction means can perform air blowing is a scanning region which is divided into a plurality of areas; temperature detection means which detects a temperature of the room air; surface temperature detection means which detects surface temperatures in the room in each of the areas of the scanning region according to the blowing direction; control means which controls the dehumidification means, the air blowing means, and the wind direction changing means on the basis of detection results of the temperature detection means and the surface temperature detection means; and indication means provided with an area indication portion (9) configured for indicating areas corresponding to the areas of the plurality of areas of the scanning region, wherein it is determined from surface temperatures detected by the surface temperature detection means that there is an object to be dried and a position where the object to be dried is placed is indicated on the indication means by indicating an indication mark in each area of the indication portion where an object to be dried is determined to be placed,wherein the fact that the drying condition of an object to be dried is changing or proceeding is indicated by changing the indication mark.

In an embodiment according to the present invention, the blowing direction of the dry air is changed toward a position where the object to be dried is placed, and the indication means indicates the position where the object to be dried is placed.

In an embodiment according to the present invention, the control means makes a comparison between the temperature of the room air detected by the temperature detection means and surface temperatures detected by the surface temperature detection means, and in the case where a surface temperature is lower than the temperature of the room air by a predetermined value or more, the control means determines that there is an object to be dried and changes the blowing direction of the dry air toward a position where the object to be dried is placed, and the indication means indicates the position where the object to be dried is placed.

### Advantageous Effects of Invention

According to the present invention, it is determined from surface temperatures detected by surface temperature detection means that there is an object to be dried, and the position where the object to be dried is placed is indicated on indication means. Therefore, it is possible to visualize that the dehumidifier has detected and recognized the object to be dried, and by only looking at the indication, a user can easily ascertain that the object to be dried has been recognized, resulting in improved ease of use.

### Brief Description of the Drawings

Figure 1 is an appearance perspective view showing a dehumidifier related to Embodiment 1 of the present invention.
Figure 2 is a top view of an operating portion of the dehumidifier related to Embodiment 1 of the present invention, as seen from above.
Figure 3 is a schematic diagram showing the inside of the dehumidifier related to Embodiment 1 of the present invention.
Figure 4 is a schematic perspective view showing wind direction changing means of Figure 1, which is enlarged.
Figure 5 is a conceptual diagram showing the detection range of an infrared sensor of the dehumidifier related to Embodiment 1 of the present invention.
Figure 6 is a flowchart showing the actions which occur when the drying mode is adopted in the dehumidifier related to Embodiment 1 of the present invention.
Figure 7 is a schematic indication diagram showing the areas in which an object to be dried is placed in the dehumidifier related to Embodiment 1 of the present invention.
Figure 8 is a flowchart showing the actions which occur when the drying mode is adopted in the dehumidifier related to Embodiment 2 of the present invention.
Figure 9 is a schematic indication diagram showing the areas in which an object to be dried is placed in the dehumidifier related to Embodiment 2 of the present invention.
Figure 10 is a flowchart showing the actions which occur when the drying mode is adopted in the dehumidifier related to Embodiment 3 of the present invention.
Figure 11 is a schematic indication diagram showing the areas in which an object to be dried is placed in the dehumidifier related to Embodiment 3 of the present invention.
Figure 12 is a schematic sectional view of the indication means and input means of the dehumidifier related to Embodiment 4 of the present invention.
Figure 13 is a schematic indication diagram showing the areas in which an object to be dried is placed in the dehumidifier related to Embodiment 4 of the present invention.
Figure 14 is a top view of an operating portion of the dehumidifier related to Embodiment 5 of the present invention, as seen from above.
Figure 15 is a schematic indication diagram of the dehumidifier related to Embodiment 5 of the present invention.

### Description of Embodiments

### Embodiment 1

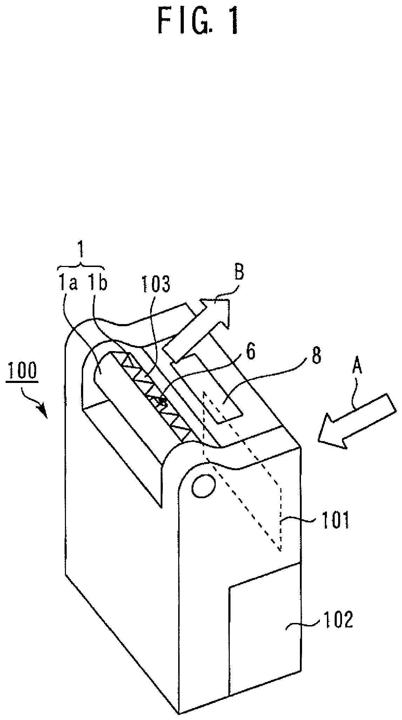

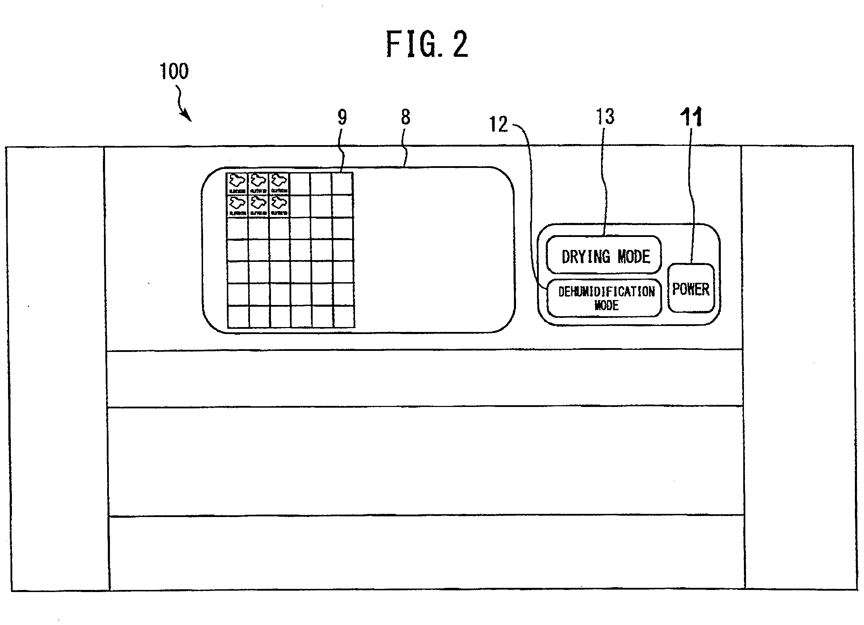

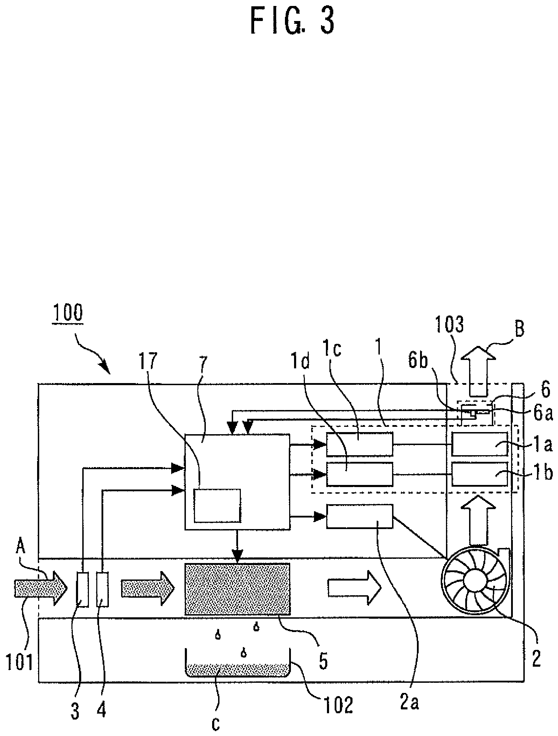

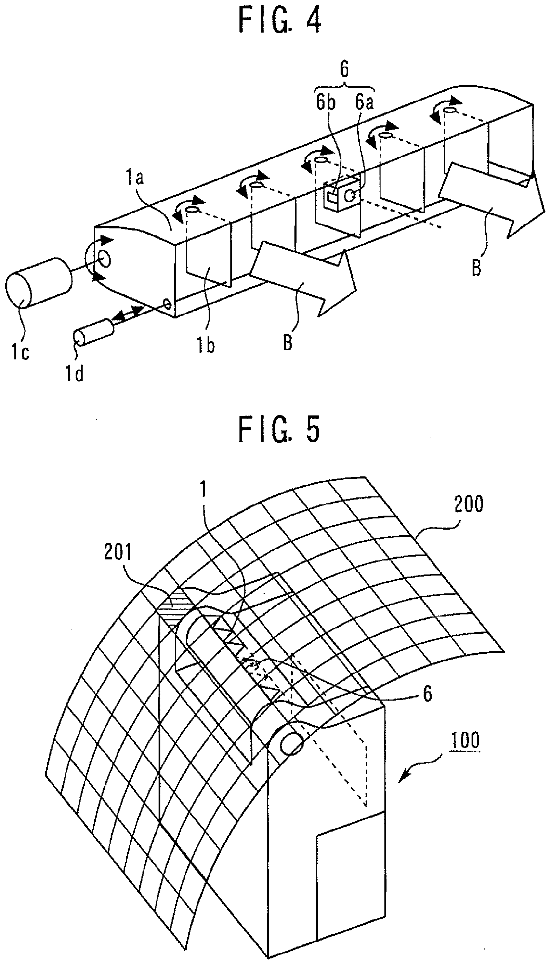

Figure 1 is an appearance perspective view showing a dehumidifier in Embodiment 1 of the present invention, Figure 2 is a top view of the dehumidifier in Embodiment 1 of the present invention, as seen from above, Figure 3 is a schematic diagram showing the inside of the dehumidifier in Embodiment 1 of the present invention, Figure 4 is a schematic block diagram showing wind direction changing means of Figure 1, which is enlarged, and Figure 5 is a conceptual diagram showing the detection range of an infrared sensor of the dehumidifier in Embodiment 1 of the present invention.

As shown in Figure 1, the dehumidifier of Embodiment 1 of the present invention is composed of a dehumidifier cabinet 100 which is formed to be capable of self-standing, an air intake port 101 for taking the room air S into the dehumidifier cabinet 100, a water storage tank 102 which accumulates the moisture removed from the air taken into the air intake port 101, and an air outlet port 103 which exhausts the dry air B, from which moisture was removed, from the dehumidifier cabinet 100 into the room.

The air outlet port 103 is composed of wind direction changing means 1 capable of changing the wind direction of the dry air B. The wind direction changing means 1 is composed of a longitudinal-direction louver 1a which changes the vertical wind direction and a lateral-direction louver 1b which changes the horizontal wind direction. The water storage tank 102 is detachably attached to the dehumidifier cabinet 100.

Furthermore, as shown in Figure 2, indication means 8 and an operating portion 10 are provided on an upper surface of the dehumidifier cabinet 100, and the operating portion 10 is provided with a power switch 11, a dehumidification mode switch 12, and a drying mode switch 13.

And as shown in Figure 3, the above-described dehumidifier is provided with a blower fan 2 which generates an airstream that suctions the room air A from the air intake port 101 and exhausts the dry air B from the air outlet port 103, a fan motor 2a which rotates the blower fan 2, a temperature sensor 3 (temperature detection means) which detects the temperature of the room air A suctioned from the air intake port 101, a humidity sensor 4 (humidity detection means) which detects the humidity of the room air A, and dehumidification means 5 which removes the moisture contained in the room air A and generates the dry air B.

Furthermore, there are provided a longitudinal-direction changing motor 1c which changes the longitudinal-direction louver 1a constituting the wind direction changing means 1, a lateral-direction changing motor 1d which changes the lateral-direction louver 1b constituting the wind direction changing means 1, an infrared sensor 6 which is surface temperature detection means, and a control circuit 7 which includes control means controlling the wind direction changing means 1 and controls the infrared sensor 6, which is surface temperature means, and the like.

The dehumidification means 5 may be any type so long as the moisture in the air is removed and is capable of being condensed, and examples of most general types include a type in which a heat pump circuit is formed and the moisture in the air is condensed in an evaporator and the desiccant type in which the moisture in the air removed by an adsorbent is condensed in an heat exchanger. The moisture removed by the dehumidification means 5 from the room air A is stored in the water storage tank 102 as condensed water C.

As shown in Figure 3, the longitudinal-direction louver 1a has a rectangular opening extending in the width direction of the dehumidifier cabinet 100 and is configured to be variable in the vertical direction, with the rotating shaft of the above-described longitudinal-direction changing motor 1c substantially as an axis. The lateral-direction louvers 1b are arranged in the longitudinal-direction louver 1a at equal intervals, are pivotally supported so as to be variable in the horizontal direction to the back on the side opposite to the opening of the longitudinal-direction louver 1a, and are configured to move in response to the driving of the above-described lateral-direction changing motor 1d.

The infrared sensor 6 is attached to one surface of the lateral-direction louver 1b arranged almost at the center of the longitudinal-direction louver 1a. As a result of this, the detection range of surface temperatures detected by the infrared sensor 6 becomes almost the same as the direction of the dry air B changed by the wind direction changing means 1. That is, the infrared sensor 6 can detect surface temperatures of objects, for examples, wet clothes and towels after laundry (hereinafter referred to as "objects to be dried") in the whole area within a range to which the wind direction changing means 1 can perform air blowing.

As the above-described infrared sensor 6, for example, an infrared sensor using the thermo-electromotive force effect is used, and the above-described infrared sensor 6 is composed of an infrared absorbing film 6a which receives thermal radiations (infrared rays) emitted from the surfaces in a predetermined region and a thermistor 6b which detects the temperature of the infrared absorbing film 6a (see Figures 2 and 3). This infrared sensor 6 converts a difference in the temperature (a warm junction) of a heat sensing portion of the infrared absorbing film 6a which rises by absorbing thermal radiations and the temperature (a cold junction) of the infrared absorbing film 6a which is detected by the thermistor 6b into an electrical signal, such as voltage, and inputs the difference to a control circuit 7. The surface temperatures in a predetermined region can be determined from the size of this electrical signal.

Here, a method of detecting surface temperatures in a predetermined region will be described with the aid of Figure 5.

As shown in Figure 5, in the case where the whole region in which the infrared sensor 6 is capable of detection is regarded as a whole scanning region 200, the whole scanning region 200 becomes a planar range which extends in the lateral direction (the horizontal direction) and in the longitudinal direction (the vertical direction). This infrared sensor 6 is controlled in such a manner as to detect surface temperatures in each of areas of the whole scanning region 200 divided into a plurality of parts (for example, one block of area is denoted by 201) in the horizontal direction and the vertical direction. As a result of this, it is possible to prepare detailed temperature maps for a wide-ranging region.

Upon operation of the dehumidification mode switch 12 of the operating portion 10 shown in Figure 2, in the case where the control circuit 7 has detected the selection of the dehumidification mode, the control circuit 7 drives the wind direction changing means 1 and permits air blowing from the air outlet port 103, so that the humidity in the room becomes an optimum humidity, rotates the blower fan 2 by driving the fan motor 2a, and drives the dehumidification means 5.

And the control circuit 7 drives the longitudinal-direction changing motor 1c and lateral-direction changing motor 1d of the wind direction changing means 1 so that air blowing is performed in the direction of a desired region in the room. As a result of this, the room air A is taken from the air intake port 101 into the dehumidifier cabinet 100, and after the detection of temperature and humidity in the room by the temperature sensor 3 and the humidity sensor 4, respectively, the room air A becomes the dry air B by being dehumidified by the dehumidification means 5, and is blown out from the air outlet port 103 into the room.

Furthermore, upon operation of the dehumidification mode switch 13 of the operating portion 10 shown in Figure 2, in the case where the control circuit 7 has detected the selection of the drying mode for objects to be dried, represented by laundry, such as cloths, for example, the control circuit 7 drives the wind direction changing means 1 and permits air blowing from the air outlet port 103, rotates the blower fan 2 by driving the fan motor 2a, and drives the dehumidification means 5.

After that, the control circuit 7 detects surface temperatures for each of the above-described plurality of divided areas using the infrared sensor 6, identifies from the detection results of surface temperatures the range in which the objects to be dried are placed, controls the longitudinal-direction changing motor 1c and the lateral-direction changing motor 1d so that the dry air B reaches the range, and turns each of the louvers 1a, 1b toward the directions of the objects to be dried.

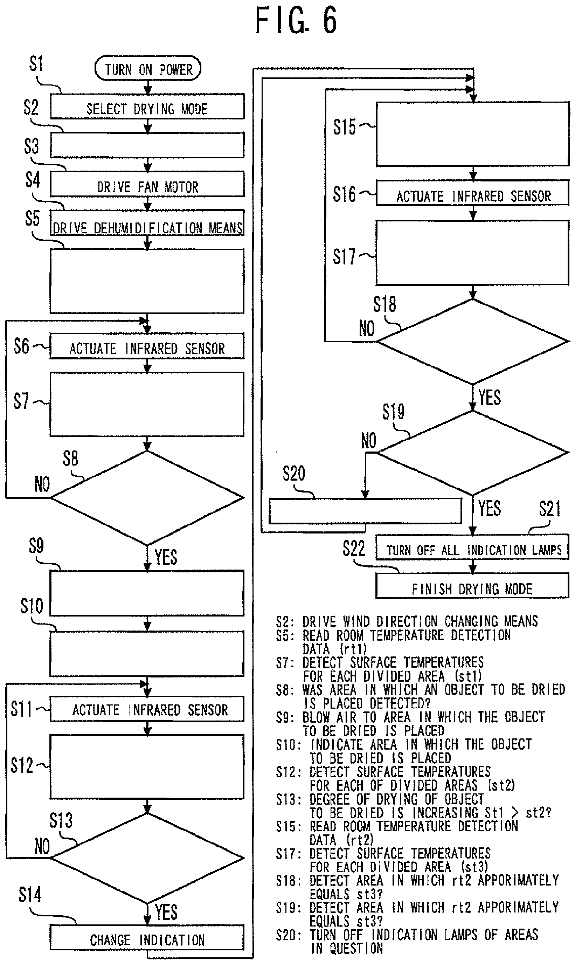

Next, actions which occur when the drying mode is selected will be described with the aid of Figure 6.

Figure 6 is a flowchart showing the actions which occur when the drying mode is adopted in the dehumidifier in Embodiment 1 of the present invention.

Upon detection of the selection of the drying mode for laundry (S1), the control circuit 7 of the dehumidifier permits air blowing from the air outlet port 103 by driving the wind direction changing means 1 (S2), rotates the blower fan 2 by driving the fan motor 2a (S3), and drives the dehumidification means 5 (S4).

By the rotation of the blower fan 2, the room air A is taken into the dehumidifier cabinet 100 from the air intake port 101, the moisture contained in the room air A is removed by the dehumidification means 5, and the dry air B is blown out of the air outlet port 103. At this time, the control circuit 7 reads the temperature in the room (rt1) from the temperature of the room air A detected by the temperature sensor 3 (S5).

After that, the control circuit 7 actuates the infrared sensor 6 (S6). As described above, the detection range (the whole scanning range 200) of surface temperatures (st) by the infrared sensor 6 is almost the same as the direction of the dry air B changed by the longitudinal-direction louver 1a and the lateral-direction louver 1b, it is possible to detect surface temperatures of the whole region in the range to which each of the louvers 1a, 1b can perform air blowing, and surface temperatures (st1) in each of the plurality of divided areas (for example, one block of area is denoted by 201) for the whole scanning range 200 of the infrared sensor 6 are detected (S7).

And from the temperature in the room (rt1) read in S5 and the surface temperatures (st1) in each of the divided areas detected by the above-described infrared sensor 6, the control circuit 7 determines whether areas in which objects to be dried are placed have been detected (S8). Whether there are objects to be dried is determined by comparing the detected surface temperatures (st1) with the temperature in the room (rt1) measured in S5.

In the case of an object which is not moist, the surface temperature (st1) is almost the same as the temperature in the room (rt1). However, for an object which is moist like an object to be dried, the surface temperature (st1) is lower than the temperature in the room (rt1). Therefore, when the temperature in the room (rt1) is 25 degrees, in the case where there is an area in which a detected surface temperature (st1) is 22 degrees, it is determined that an object to be dried is placed in that area.

When in S8 the control circuit 7 determines that among a plurality of divided areas for the whole scanning range 200 of the infrared sensor 6, an area in which an object to be dried is placed has been detected, the control circuit 7 controls each of the longitudinal-direction changing motor 1c and the lateral-direction changing motor 1d so that the air blowing direction is turned toward the area in which the object to be dried is placed, and causes the directions of the longitudinal-direction louver 1a and the lateral-direction louver 1b to be changed (S9). As a result of this, the dry air B from the air outlet port 103 is blown out in the direction in which the object to be dried is placed.

After that, the area in which the object to be dried, which was detected in S8, is placed is indicated on the indication means 8 (S10). In this embodiment, the indication means 8 is provided on the upper surface of the dehumidifier cabinet 100. However, the indication means 8 may be provided at any location, such as the front surface of the dehumidifier cabinet 100, so long as the location can be visually recognized from outside, and the location can be set appropriately in terms of the ease of use. Also, visual recognition is possible even when the indication means 8 is provided on external operation means, such as a remote control unit, instead of the inside of a cabinet.

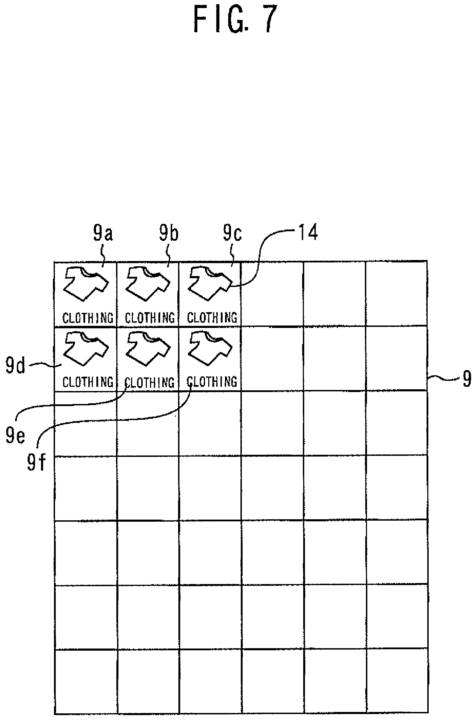

As shown in Figure 7, the indication means 8 is provided with an area indication portion 9 capable of indicating areas obtained by dividing the whole scanning range 200 into a plurality of parts. The area indication portion 9 is such that divided areas corresponding to areas obtained by dividing the above-described whole scanning range 200 into a plurality of parts are indicated. The divided-area indication may be performed in a one-to-one relationship to the areas obtained by dividing the whole scanning range 200 into a plurality of parts, or for the areas obtained by dividing the whole scanning range 200 into a plurality of parts, several areas may be indicated on one indication area by being brought together.

As shown in Figure 7, for an area where an object to be dried is determined to be placed, an indication mark 14 is indicated in each area of the indication portion 9, for example, 9a to 9f. In the embodiment of the present invention, indication is performed by the picture of clothes. However, others pictures and characters (for examples, clothes and laundry) may be indicated and the inside of an area may be colored or caused to emit light.

In the embodiment of the present invention, it is ensured that an area in question is indicated after the establishment of the determination that an object to be dried is placed. However, during surface temperature detection an indication mark 14 is indicated in all areas and is caused to blink, whereby it is possible to make a user to visually recognize that surface temperatures are being detected.

After that, the control circuit 7 actuates the infrared sensor 6 (S11), which detects surface temperatures (st2) for each of the areas divided into a plurality of parts for the whole scanning range 200 of the infrared sensor 6 (S12).

After that, the control circuit 7 determines from the detected surface temperatures (st2) whether the degree of drying of the object to be dried is increasing (S13). In the determination as to whether the degree of drying is increasing, a comparison is made between the surface temperatures (st1) detected in S7 and the surface temperatures (st2) detected in S13, and it is determined that the degree of drying is increasing when st1 > st2.

In the embodiment of the present invention, although the determination as to whether the degree of drying is increasing is performed by comparing the surface temperatures, the determination may be performed from a difference between the temperature in the room and the surface temperature observed each time the infrared sensor is actuated, and the determination is not limited to the above-described determination method.

When in S13 it is determined that the degree of drying of the object to be dried is increasing, the fact that the drying condition is changing or proceeding is indicated, for example, by changing the indication color and shade of the indication mark 14 indicated as a picture of clothes in the area indication portion 9 of the indication means 8, changing the indication mark 14 to another picture, and causing the indication mark 14 to blink (S14).

After that, the control circuit 7 reads the temperature in the room (rt2) (S15). Furthermore, the infrared sensor 6 is activated (S16) and surface temperatures (st3) for each of the plurality of divided areas are detected for the whole scanning range 200 of the infrared sensor 6 (S17).

After that, the control circuit 7 makes a comparison between the temperature in the room (rt2) detected in S15 and the surface temperatures (st3) detected in S17, and determines whether there is an area in which rt2 approximately equals st3 (S18) in an area in which an object to be dried is placed.

In the case where in S18 there was an area in which rt2 approximately equals st3, whether rt2 approximately equals st3 in all areas in which an object to be dried is placed is determined (S19). In the case where there is an area in which rt2 does not approximately equal st3, the flow of actions proceeds to S20, where the lamp of the indication mark 14 is turned off only for areas in which rt2 approximately equals st3.

In the case where rt2 approximately equals st3 in all areas in which an object to be dried is placed, the flow of actions proceeds to S21, where the lamps of all indication marks 14 are turned off, the driving of the dehumidification means 5 is stopped, the driving of the fan motor 2a is stopped, the driving of the wind direction changing means 1 is stopped, a user is informed of that condition by a buzzer, for example, which is not shown in the figures, and the drying mode is finished (S22).

As described above, according to Embodiment 1 of the present invention, it is ensured that when the drying mode is adopted, an area in which an object to be dried is placed is detected, and that the detected area is indicated on the indication means. Therefore, it is possible to obtain the effect that by looking at an indication, a user can easily ascertain that the dehumidifier has detected and recognized an object to be dried.

Furthermore, it is ensured that the fact that the degree of drying has increased is indicated by changing an indication. Therefore, even when a user does not move to the location where an object to be dried is placed in order to touch the object to be dried, it is possible to ascertain that the degree of drying has increased and convenience is improved.

### Embodiment 2

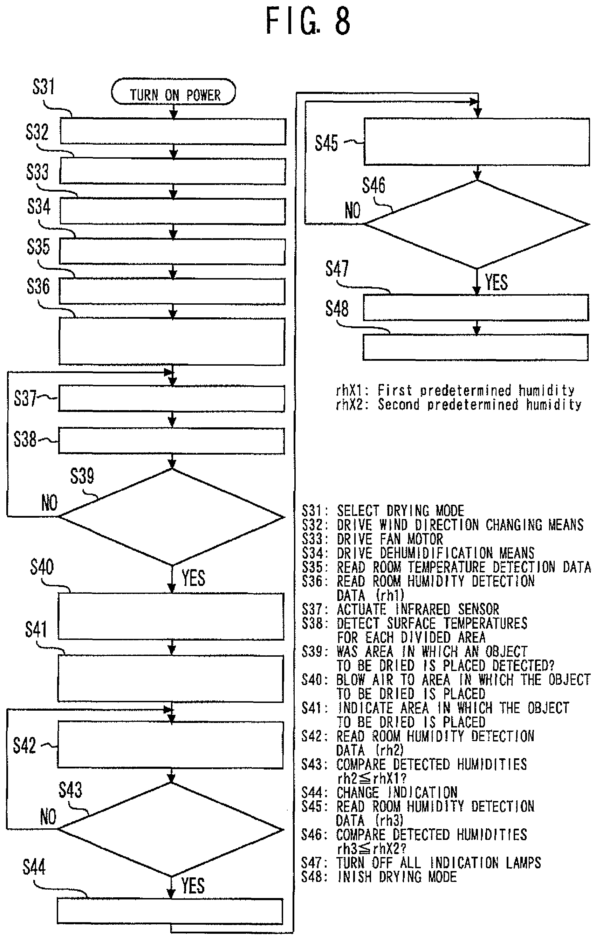

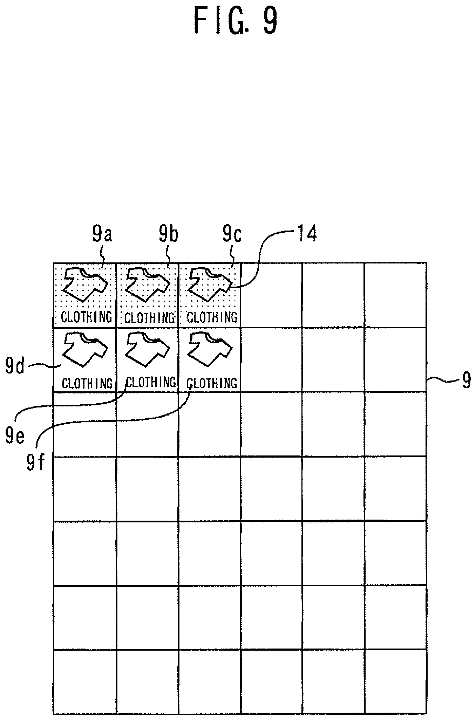

A dehumidifier in Embodiment 2 of the present invention is the same as the dehumidifier in Embodiment 1 of the present invention in the configuration and the method of detecting surface temperatures described in Figure 1 to Figure 5 as well as the indication described in Figure 7, and differs only in actions when the drying mode is adopted. Therefore, descriptions of parts other than pertinent parts are omitted and the actions which occur when the drying mode is adopted will be described with the aid of Figure 8. Figure 8 is a flowchart showing the actions which occur when the drying mode is adopted in the dehumidifier in Embodiment 2 of the present invention, and Figure 9 is a schematic indication diagram showing the areas in which an object to be dried is placed in the dehumidifier in Embodiment 2 of the present invention.

Upon detection of the fact that the drying mode of laundry has been adopted (S31), the control circuit 7 of the dehumidifier permits air blowing from the air outlet port 103 by driving the wind direction changing means 1 (S32), rotates the blower fan 2 by driving the fan motor 2a (S33), and drives the dehumidification means 5 (S34).

By the rotation of the blower fan 2,the room air A is taken into the dehumidifier cabinet 100 from the air intake port 101, the moisture contained in the room air A is removed by the dehumidifier means 5, and the dry air B is blown out from the air outlet port 103. At this time, the control circuit 7 reads the temperature in the room from the temperature of the room air A detected by the temperature sensor 3 (S35) and reads the humidity in the room (rh1) detected by the humidity sensor 4 (S36).

After that, the control circuit 7 actuates the infrared sensor 6 (S37). As described in Embodiment 1, the detection range (the whole scanning range 200) of surface temperatures by the infrared sensor 6 is almost the same as the direction of the dry air B changed by the longitudinal-direction louver 1a and the lateral-direction louver 1b, it is possible to detect surface temperatures of the whole region in the range to which each of the louvers 1a, 1b can perform air blowing, and surface temperatures in each of the plurality of divided areas (for example, one block of area is denoted by 201) for the whole scanning range 200 of the infrared sensor 6 are detected (S38).

And from the temperature in the room read in S35 and the surface temperatures in each of the divided areas detected by the infrared sensor 6, the control circuit 7 determines whether areas in which objects to be dried are placed have been detected (S39). Whether there are objects to be dried is determined by comparing the detected surface temperatures with the temperature in the room measured in S35.

When in S39 the control circuit 7 determines that among a plurality of divided areas for the whole scanning range 200, an area in which an object to be dried is placed has been detected, the control circuit 7 controls each of the longitudinal-direction changing motor 1c and the lateral-direction changing motor 1d so that the air blowing direction is turned toward the area in which the object to be dried is placed, and causes the directions of the longitudinal-direction louver 1a and the lateral-direction louver 1b to be changed (S40). As a result of this, the dry air B from the air outlet port 103 is blown out in the direction in which the object to be dried is placed.

After that, the area in which the object to be dried is placed, which was detected in S39, is indicated on the indication means 8 (S41). As shown in Figure 7, in the same manner as in Embodiment 1, the indication means 8 is provided with an area indication portion 9 capable of indicating areas obtained by dividing the whole scanning range 200 into a plurality of parts.

The area indication portion 9 is such that divided areas corresponding to areas obtained by dividing the above-described whole scanning range 200 into a plurality of parts are indicated, and in an area where an object to be dried is determined to be placed, an indication mark 14 is indicated for each area of the indication portion 9, for example, 9a to 9f.

After that, the control circuit 7 reads the humidity in the room (rh2), which was detected by the humidity sensor 4 (S42), and determines whether the detected humidity in the room (rh2) is not more than a first predetermined humidity (rhX1), which has been set beforehand (S43).

In the case where in S43 rh2≦rhX1, it is determined that the degree of drying of the object to be dried has increased, and as shown in Figure 9, the fact that the drying condition is changing or proceeding is indicated, for example, by changing the indication color and shade of the indication mark 14 indicated as a picture of clothes in the area indication portion 9 of the indication means 8, changing the indication mark 14 to another picture, and causing the indication mark 14 to blink (S44).

After that, the control circuit 7 reads the humidity in the room (rh3) detected by the humidity sensor 4 (S45), and determines whether the detected humidity in the room (rh3) is not more than a second predetermined humidity (rhX2), which has been set beforehand (S46).

After that, in the case where in S46 rh3≦rhX12, the control circuit 7 determines that the object to be dried has been dried, and the flow of actions proceeds to S47, where the lamps of all indication marks 14 are turned off, the driving of the dehumidification means 5 is stopped, the driving of the fan motor 2a is stopped, the driving of the wind direction changing means 1 is stopped, a user is informed of that condition by a buzzer, for example, which is not shown in the figures, and the drying mode is finished (S48).

As described above, according to Embodiment 2 of the present invention, as in Embodiment 1 of the present invention, it is ensured that when the drying mode is adopted, an area in which an object to be dried is placed is detected and that the detected area is indicated on the indication means. Therefore, it is possible to obtain the effect that by looking at an indication, a user can easily ascertain that the dehumidifier has detected and recognized an object to be dried.

Furthermore, it is ensured that the fact that the degree of drying has increased is indicated by changing an indication. Therefore, even when a user does not move to the location where an object to be dried is placed in order to touch the object to be dried, it is possible to ascertain that the degree of drying has increased and convenience is improved.

### Embodiment 3

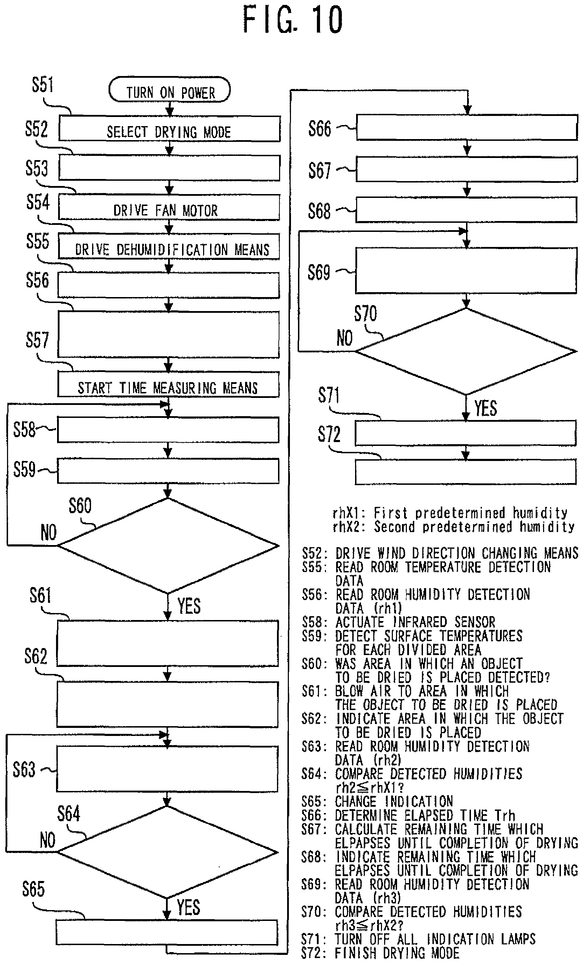

A dehumidifier in Embodiment 3 of the present invention differs from the dehumidifier of Embodiment 2 only in actions which occur when the drying mode is adopted and the addition of the indication of time, which will be described later. Therefore, descriptions of parts other than pertinent parts are omitted and the actions which occur when the drying mode is adopted will be described with the aid of Figure 10. Figure 10 is a flowchart showing the actions which occur when the drying mode is adopted in the dehumidifier in Embodiment 3 of the present invention.

Upon detection of the fact that the drying mode of laundry has been adopted (S51), the control circuit 7 of the dehumidifier permits air blowing from the air outlet port 103 by driving the wind direction changing means 1 (S52), rotates the blower fan 2 by driving the fan motor 2a (S53), and drives the dehumidification means 5 (S54).

By the rotation of the blower fan 2,the room air A is taken into the dehumidifier cabinet 100 from the air intake port 101, the moisture contained in the room air A is removed by the dehumidifier means 5, and the dry air B is blown out from the air outlet port 103. At this time, the control circuit 7 reads the temperature in the room from the temperature of the room air A detected by the temperature sensor 3 (S55) and reads the humidity in the room (rh1) detected by the humidity sensor 4 (S56). Time measuring means 17 starts time measuring from the point of time when the humidity in the room (rh1) was read.

After that, the control circuit 7 actuates the infrared sensor 6 (S58). As described in Embodiment 1, the detection range (the whole scanning range 200) of surface temperatures by the infrared sensor 6 is almost the same as the direction of the dry air B changed by the longitudinal-direction louver 1a and the lateral-direction louver 1b, it is possible to detect surface temperatures of the whole region in the range to which each of the louvers 1a, 1b can perform air blowing, and surface temperatures in each of the plurality of divided areas (for example, one block of area is denoted by 201) for the whole scanning range 200 of the infrared sensor 6 are detected (S59).

And from the temperature in the room read in S55 and the surface temperatures in each of the divided areas detected by the infrared sensor 6, the control circuit 7 determines whether areas in which objects to be dried are placed have been detected (S60). Whether there are objects to be dried is determined by comparing the detected surface temperatures with the temperature in the room measured in S55.

When in S60 the control circuit 7 determines that among a plurality of divided areas for the whole scanning range 200 of the infrared sensor 6, an area in which an object to be dried is placed has been detected, the control circuit 7 controls each of the longitudinal-direction changing motor 1c and the lateral-direction changing motor 1d so that the air blowing direction is turned toward the area in which the object to be dried is placed, and causes the directions of the longitudinal-direction louver 1a and the lateral-direction louver 1b to be changed (S61). As a result of this, the dry air B from the air outlet port 103 is blown out in the direction in which the object to be dried is placed.

After that, the area in which the object to be dried is placed, which was detected in S60, is indicated on the indication means 8 (S62). As shown in Figure 7, in the same manner as in Embodiment 1 and Embodiment 2, the indication means 8 is provided with an area indication portion 9 capable of indicating areas obtained by dividing the whole scanning range 200 into a plurality of parts. The area indication portion 9 is such that divided areas corresponding to areas obtained by dividing the above-described whole scanning range 200 into a plurality of parts are indicated, and in an area where an object to be dried is determined to be placed, an indication mark 14 is indicated for each area of the indication portion 9, for example, 9a to 9f.

After that, the control circuit 7 reads the humidity in the room (rh2), which was detected by the humidity sensor 4 (S63), and determines whether the detected humidity in the room (rh2) is not more than a first predetermined humidity (rhX1), which has been set beforehand (S64).

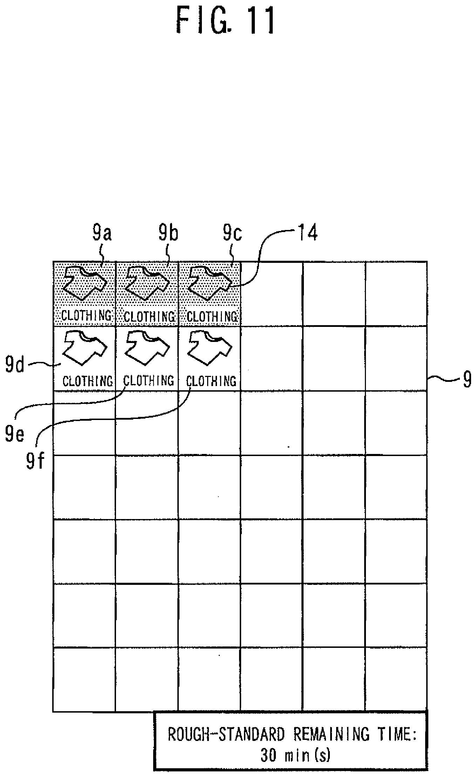

In the case where in S64 rh2≦rhX1, it is determined that the degree of drying of the object to be dried has increased, and as shown in Figure 11, the fact that the drying condition is changing or proceeding is indicated, for example, by changing the indication color and shade of the indication mark 14 indicated as a picture of clothes in the area indication portion 9 of the indication means 8, changing the indication mark 14 to another picture, and causing the indication mark 14 to blink (S65), and determines the time Trh which elapses until rh2≦rhX1 (S66).

After that, the control circuit 7 calculates a rough-standard remaining time at which the drying of the object to be dried is completed from a predetermined coefficient set by Trh and parameters, such as the temperature in the room (S67), and indicates this rough-standard remaining time on the indication means 8 (S68). The indication may be changed in such a manner that the rough-standard remaining time is counted down until the finish of drying.

After that, the control circuit 7 reads the humidity in the room (rh3) detected by the humidity sensor 4 (S69), and determines whether the detected humidity in the room (rh3) is not more than a second predetermined humidity (rhX2), which has been set beforehand (S70).

After that, in the case where in S70 rh3≦rhX12, the control circuit 7 determines that the object to be dried has been dried, and the flow of actions proceeds to S71, where the lamps of all indications are turned off, the driving of the dehumidification means 5 is stopped, the driving of the fan motor 2a is stopped, the driving of the wind direction changing means 1 is stopped, a user is informed of that condition by a buzzer, for example, which is not shown in the figures, and the drying mode is finished (S72).

As described above, according to Embodiment 3 of the present invention, as in Embodiment 1 of the present invention and in Embodiment 2 of the present invention, it is ensured that when the drying mode is adopted, an area in which an object to be dried is placed is detected and that the detected area is indicated on the indication means. Therefore, it is possible to obtain the effect that by looking at an indication, a user can easily ascertain that the dehumidifier has detected and recognized an object to be dried.

Furthermore, it is ensured that the fact that the degree of drying has increased is indicated by changing an indication. Therefore, even when a user does not move to the location where an object to be dried is placed in order to touch the object to be dried, it is possible to ascertain that the degree of drying has increased and convenience is improved.

Furthermore, because a rough-standard time at which the drying of an object to be dried is completed is indicated, it becomes easy for a user to have prospects of time when the user does other jobs and convenience is improved.

### Embodiment 4

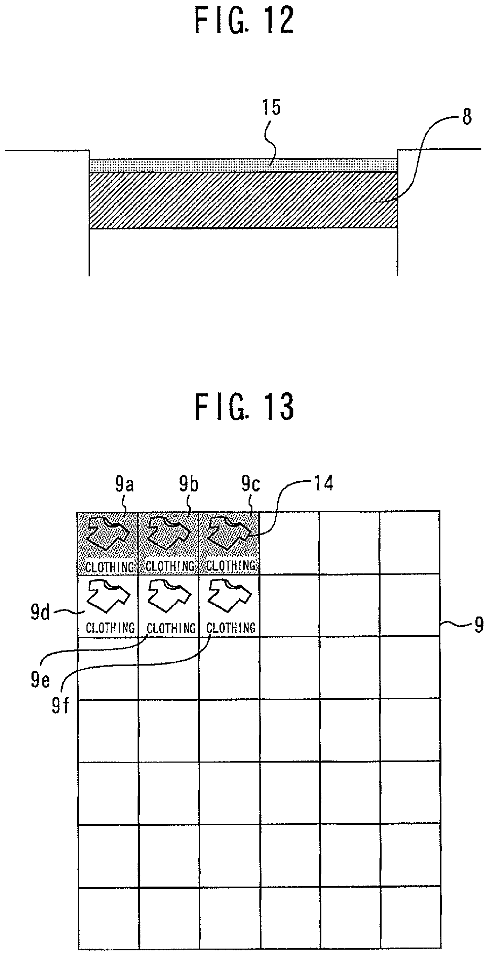

A dehumidifier in Embodiment 4 of the present invention differs from the dehumidifier in Embodiment 1 of the present invention in that input means is provided on the surface of the indication means of Embodiment 1, and is the same as Embodiment 1 of the present invention in other respects such as configuration. Therefore, actions of the input means will be described with the aid of Figures 12 and 13 and descriptions of other points are omitted. The figures and contents given in the above-described embodiments of the present invention are partly cited in the following description.

Figure 12 is a schematic sectional view of the indication means and input means of the dehumidifier in Embodiment 4 of the present invention, and Figure 13 is a schematic indication diagram showing the areas in which an object to be dried is placed in the dehumidifier in Embodiment 4 of the present invention.

As shown in Figure 12, input means 15 is provided on the surface side of the indication means 8. The input means 15 is input means which allows input by, for example, a change in electrostatic capacitance, such as a touch panel, and has transmissive properties which allow the indication contents of the indication means 8 to be visually recognized by transmission.

As shown in Figure 7, in the same manner as in Embodiment 1 of the present invention, an area where an object to be dried is placed is indicated on the indication means 8, and an indication mark 14 is indicated for each area of the area indication portion 9, for example, 9a to 9f. And when the degree of drying of an object to be dried has increased, as shown in Figure 13, the fact that the drying condition is changing or proceeding is indicated, for example, by changing the indication color and shade of the indication mark 14 indicated as a picture of clothes in the area indication portion 9 of the indication means 8, changing the indication mark 14 to another picture, and causing the indication mark 14 to blink.

In the case where the change and progress of the drying condition differ from area to area, as shown in Figure 13, the change and progress are indicated by indications which differ from area to area (in this case, the shade of the area indication color). Figure 13 shows that the degree of drying of 9a to 9c is lower than the degree of drying of 9d to 9f.

In the case where the degree of drying of 9a to 9c is to be improved in such a situation, the input means 15 on the areas 9a to 9c are touched, then the information that the areas 9a to 9c have been selected is transmitted to the control circuit 7. Because the input means 15 is input means such as a touch panel, input is made possible by individually touching each area or by touching continuous areas with a finger in a shingle motion. The indication of an area selected at this time may be changed to an indication indicative of the fact that a selection was made.

On the basis of this inputted area information, the control circuit 7 controls each of the longitudinal-direction changing motor 1c and the lateral-direction changing motor 1d so that the air blowing direction is turned toward the selected area, and causes the directions of the longitudinal-direction louver 1a and the lateral-direction louver 1b to be changed. As a result of this, it is possible to change the wind direction to an area for which the degree of drying is to be improved and it is possible to improve the degree of drying.

As described above, according to Embodiment 4 of the present invention, it is ensured that when the drying mode is adopted, an area in which an object to be dried is placed is detected and that the detected area is indicated on the indication means, whereby it is ensured that an area for which the degree of drying is to be improved is selected from the input means provided on the surface of the indication means, with the result that the wind direction can be changed to the area for which the degree of drying of an object to be dried is to be improved. Therefore, the degree of drying of the object to be dried is accelerated and the convenience for a user is improved.

### Embodiment 5

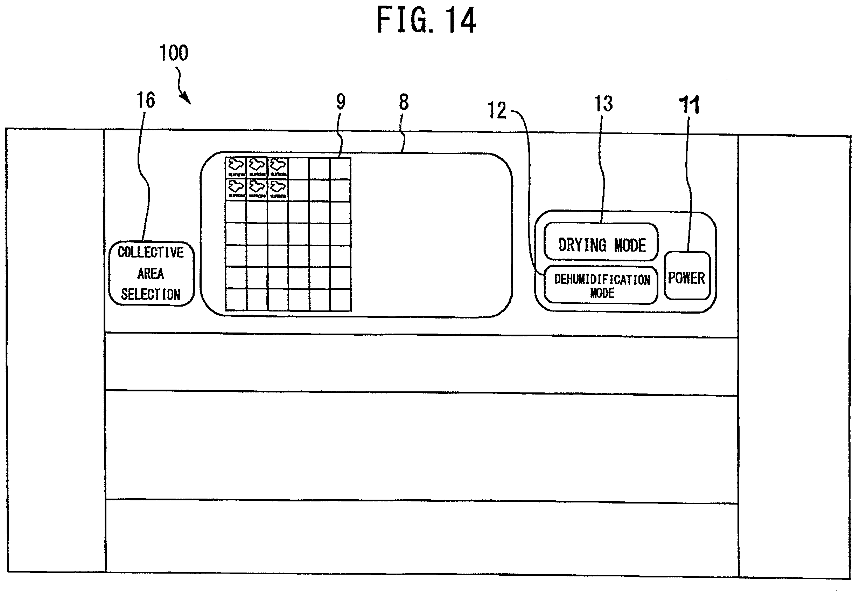

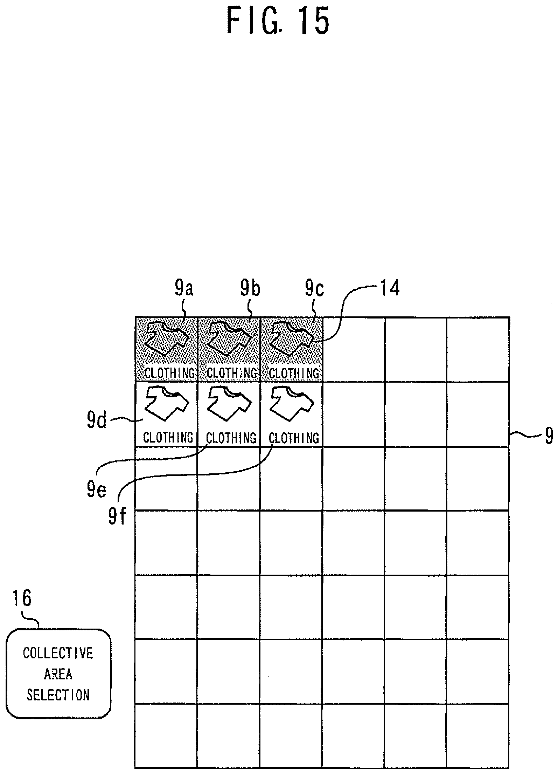

A dehumidifier in Embodiment 5 of the present invention differs from the dehumidifier in Embodiment 1 of the present invention in that a collective area selection switch is provided in the vicinity of the indication means in Embodiment 1 of the present invention and is the same as in Embodiment 1 of the present invention in other respects such as configuration. Therefore, with the aid of Figures 14 and 15 actions of the collective area selection switch will be described and other points are omitted. The figures and contents given in the above-described embodiments of the present invention are partly cited in the following description.

Figure 14 is a top view of an operating portion of the dehumidifier in Embodiment 5 of the present invention, as seen from above, and Figure 15 is a schematic indication diagram of the dehumidifier in Embodiment 5 of the present invention. As shown in Figure 14, a collective area selection switch 16 is provided on the side of the indication means 8. The collective area selection switch 16 may be a touch panel type which allows input by, for example, a change in electrostatic capacitance or a mechanical switch.

In the same manner as in Embodiment 1 of the present invention, as shown in Figure 14, an area where an object to be dried is placed is indicated on the indication means 8, and an indication mark 14 is indicated for each area of the area indication portion 9, for example, 9a to 9f. And when the degree of drying of an object to be dried has increased, the fact that the drying condition is changing or proceeding is indicated, for example, by changing the indication color and shade of the indication mark 14 indicated as a picture of clothes in the area indication portion 9 of the indication means 8, changing the indication mark 14 to another picture, and causing the indication mark 14 to blink.

In the case where the change and progress of the drying condition differ from area to area, as shown in Figure 15, the change and progress are indicated by indications which differ from area to area (in this case, the shade of the area indication color). Figure 15 shows that the degree of drying of 9a to 9c is lower than the degree of drying of 9d to 9f.

In the case where the degree of drying of 9a to 9c is to be improved in such a situation, the collective area selection switch 16 is pressed, then the information that the areas 9a to 9c having a low degree of drying have been collectively selected is transmitted to the control circuit 7. The indication of an area selected at this time may be changed to an indication indicative of the fact that a selection was made.

On the basis of this inputted area information, the control circuit 7 controls each of the longitudinal-direction changing motor 1c and the lateral-direction changing motor 1d so that the air blowing direction is turned toward the selected area, and causes the directions of the longitudinal-direction louver 1a and the lateral-direction louver 1b to be changed. As a result of this, it is possible to change the wind direction to an area for which the degree of drying is to be improved and it is possible to improve the degree of drying.

As described above, according to Embodiment 5 of the present invention, it is ensured that when the drying mode is adopted, an area in which an object to be dried is placed is detected and that the detected area is indicated on the indication means, whereby specific areas for which the degree of drying is to be improved are collectively selected using the collective area selection switch, with the result that the wind direction can be changed to the areas for which the degree of drying of an object to be dried is to be improved. Therefore, the degree of drying of the object to be dried is accelerated and the convenience for a user is improved.

### Industrial Applicability

The present invention can be used in a dehumidifier which removes the humidity in a room and in particular in a dehumidifier having the function of drying laundry, which refers to objects that are to be dried and hung in a room.

### Description of Symbols

1 wind direction changing means, 1a longitudinal-direction louver, 1b lateral-direction louver, 1c longitudinal-direction changing motor, 1d lateral-direction changing motor, 2 blower fan, 2a fan motor, 3 temperature sensor, 4 humidity sensor, 5 dehumidification means, 6 infrared sensor, 6a infrared absorbing film, 6b thermistor, 7 control circuit, 8 indication means, 9 area indication portion, 9a to 9f indication area, 10 operating portion, 11 power switch, 12 dehumidification mode switch, 13 drying mode switch, 14 indication mark, 15 input means, 16 collective area selection switch, 17 time measuring means, 100 dehumidifier cabinet, 101 air intake port, 102 water storage tank, 103 air outlet port, 200 whole scanning range, 201 divided area, A room air, B dry air.

## Claims

1. A dehumidifier comprising:
dehumidification means (5) configured for removing moisture contained in the air;
air blowing means (2) configured for suctioning the air in a room and blowing out into the room dry air obtained by causing the suctioned air to pass through the dehumidification means (5);
wind direction changing means (1) configured for changing a blowing direction of the dry air; wherein the whole area within a range to which the wind direction means can perform air blowing is a scanning region which is divided into a plurality of areas;
temperature detection means (3) configured for detecting a temperature of the room air;
surface temperature detection means (6) attached to the wind direction changing means (1) and configured for detecting surface temperatures in the room in each of the areas (201) of the scanning region (200) according to the blowing direction;
control means {7} configured for controlling the dehumidification means (5), the air blowing means (2), and the wind direction changing means (1) on the basis of detection results of the temperature detection means (3) and the surface temperature detection means (6); **characterised in that** the dehumidifier comprises further:
indication means (8) provided with an area indication portion (9) configured for indicating areas corresponding to the areas of the plurality of areas of the scanning region,
wherein it is determined from surface temperatures detected by the surface temperature detection means (6) that there is an object to be dried and a position where the object to be dried is placed is indicated on the indication means (8) by indicating an indication mark (14) in each area of the indication portion (9) where an object to be dried is determined to be placed, wherein the fact that the drying condition of an object to be dried is changing or proceeding is indicated by changing the indication mark (9).

2. A dehumidifier according to claim 1,
wherein the blowing direction of the dry air is changed toward a position where the object to be dried is placed.

3. A dehumidifier according to claim 2,
wherein the control means (7) makes a comparison between the temperature of the room air detected by the temperature detection means (3) and surface temperatures detected by the surface temperature detection means (6), and in the case where a surface temperature is lower than the temperature of the room air by a predetermined value or more, the control means (7) determines that there is an object to be dried.

4. The dehumidifier according to claim 1, further comprising:
an operating portion (10) for selecting a drying mode for drying an object to be dried,
wherein the indication means (8) indicates an area where the object to be dried is placed when the drying mode is selected.

5. The dehumidifier according to claim 4,
wherein the indication means (8) can indicate different indications according to the situation for each of the areas, and
wherein a dry condition of the object to be dried is determined from a surface temperature of the object to be dried, which is detected by the surface temperature detection means (6), and the indication means (8) changes an indication for each of the areas according to the dry condition.

6. The dehumidifier according to claim 4 or 5,
wherein in the case where a surface temperature of the object to be dried, which is detected by the surface temperature detection means (6), shows a difference of not less than a predetermined temperature after a lapse of a predetermined time, it is determined that a dry condition of the object to be dried has changed, and the indication means (8) changes an indication for each of the areas individually in stages according to the change in the dry condition.

7. The dehumidifier according to claim 4 or 5, further comprising:
humidity detection means (4) configured for detecting humidity in the room,
wherein in the case where the humidity in the room decreases to a predetermined humidity, it is determined that a dry condition of the object to be dried has changed, and the indication means (8) changes an indication for each of the areas individually in stages according to the change in the dry condition.

8. The dehumidifier according to claim 4 or 5, further comprising:
humidity detection means (4) configured for detecting humidity in the room; and
time measuring means (17) configured for measuring a time which elapses until the humidity in the room decreases to a predetermined humidity,
wherein in the case where the humidity in the room decreases to the predetermined humidity, it is determined that a dry condition of the object to be dried has changed and the indication means (8) changes an indication for each of the areas individually in stages according to the change in the dry condition, and
wherein a time which elapses until drying is finished is estimated by the control means (7) from the time which elapses until the humidity in the room decreases to the predetermined humidity, which is measured by the time measuring means (17), and a predetermined coefficient, and the time is indicated on the indication means (8).

9. The dehumidifier according to any of claims 1 to 8, wherein the indication means (8) performs indication using a picture, a character, a color or a combination thereof.

10. The dehumidifier according to any of claims 1 to 9, wherein the indication means (8) changes an indication in stages by a shape change in a picture, a change of a character, a change of shade of the same indication color, a change to a different indication color, or blinking of an indication according to change in a dry condition of the object to be dried.

11. The dehumidifier according to any of claims 4 to 8, further comprising:
input means (15) for selecting from the areas provided on the areas indicated on the indication means (8), the input means (15) being transparent for allowing indications on the indication means (8) to be seen through the input means (15);
wherein the control means (7) controls the wind direction changing means (1) to change the blowing direction of the dry air toward a range in the room indicated by the areas selected by the input means (15).

12. The dehumidifier according to claim 11, wherein the input means (15) is capable of individually selecting two or more of the areas.

13. The dehumidifier according to claim 11 or 12, wherein in the case where the plurality of areas are continuously indicated, the input means (15) is capable of select the areas by continuous sliding on the areas.

14. The dehumidifier according to any of claims 11 to 13, wherein the input means (15) accepts input from a part of the areas, each area of the part including an indication, and does not accept input from the other part of the areas, each area of the other part including no indication.

15. The dehumidifier according to any of claims 1 to 8, further comprising:
a specific-area selection switch (16) configured for selecting the areas collectively,
wherein by an operation of the specific-area selection switch (16), among the areas, the number of which is predetermined, areas having the same indication in a predetermined dry condition are collectively selected, and
wherein the control means (7) controls the wind direction changing means (1) to change the blowing direction of the dry air toward a range in the room indicated by the areas collectively selected.

## Patentansprüche

1. Entfeuchter, umfassend:
Entfeuchtungsmittel (5), konfiguriert zur Entfernung von Feuchtigkeit aus der Luft;
Luftblasemittel (2), konfiguriert zum Ansaugen der Luft in einem Raum und Ausblasen von trockener Luft in den Raum, die erhalten wird, indem die angesaugte Luft veranlasst wird durch das Entfeuchtungsmittel (5) zu strömen;
Windrichtungsänderungsmittel (1), konfiguriert zum Ändern einer Blasrichtung der trockenen Luft; wobei das gesamte Gebiet innerhalb eines Bereichs, zu welchem das Windrichtungsmittel das Blasen der Luft durchführen kann, eine Scanregion ist, die in mehrere Gebiete unterteilt ist;
Temperaturerkennungsmittel (3), konfiguriert zur Erkennung einer Temperatur der Raumluft;
Oberflächentemperaturerkennungsmittel (6), angebracht an dem Windrichtungsänderungsmittel (1) und konfiguriert zur Erkennung von Oberflächentemperaturen in dem Raum in jedem der Bereiche (201) der Scanregion (200) entsprechend der Blasrichtung;
Steuermittel {7}, konfiguriert zur Steuerung des Entfeuchtungsmittels (5), des Luftblasemittels (2) und des Windrichtungsänderungsmittels (1) auf der Grundlage der Erkennungsergebnisse des Temperaturerkennungsmittels (3) und des Oberflächentemperaturerkennungsmittels (6); **dadurch gekennzeichnet, dass** der Entfeuchter ferner umfasst:
Anzeigemittel (8), versehen mit einem Gebietsanzeigeabschnitt (9), der konfiguriert ist zur Anzeige von Gebieten entsprechend den Gebieten der mehreren Gebiete der Scanregion,
wobei von den Oberflächentemperaturen, die durch die Oberflächentemperaturerkennungsmittel (6) erkannt werden, bestimmt wird, dass ein Objekt zu trocknen ist, und eine Position, an der das zu trocknende Objekt platziert ist, auf dem Anzeigemittel (8) durch ein Anzeigezeichen (14) in jedem Gebiet des Angabeabschnitts (9) angegeben wird, wo ein zu trocknendes Objekt bestimmt wird, platziert werden zu sollen, wobei die Tatsache, dass der Trockenzustand eines zu trocknenden Objekts sich ändert oder fortschreitet, durch eine Änderung des Anzeigezeichens (9) angegeben wird.

2. Entfeuchter nach Anspruch 1,
wobei die Blasrichtung der trockenen Luft zu einer Position hin geändert wird, an der das zu trocknende Objekt platziert ist.

3. Entfeuchter nach Anspruch 2,
wobei das Steuermittel (7) einen Vergleich zwischen der Temperatur der Raumluft, die durch das Temperaturerkennungsmittel (3) erkannt wird, und den Oberflächentemperaturen, die durch das Oberflächentemperaturerkennungsmittel (6) erkannt werden, vornimmt, und in dem Fall, in dem eine Oberflächentemperatur um einen vorgegebenen Wert oder mehr geringer ist, als die Temperatur der Raumluft, das Steuermittel (7) feststellt, dass ein zu trocknendes Objekt vorliegt.

4. Entfeuchter nach Anspruch 1, ferner umfassend:
einen Betriebsabschnitt (10) zum Auswählen eines Trockenmodus zum Trocknen eines zu trocknenden Objekts,
wobei das Anzeigemittel (8) ein Gebiet anzeigt, wo das zu trocknende Objekt platziert wird, wenn Trockenmodus gewählt ist.

5. Entfeuchter nach Anspruch 4,
wobei das Anzeigemittel (8) verschiedene Anzeigen entsprechend der Situation für jedes der Gebiete anzeigen kann, und
wobei ein Trockenzustand des zu trocknenden Objekts aus einer Oberflächentemperatur des zu trocknenden Objekts bestimmt wird, die durch das Oberflächentemperaturerkennungsmittel (6) erkannt wird, und das Anzeigemittel (8) eine Anzeige für jeden der Bereiche dem Trockenzustand entsprechend ändert.

6. Entfeuchter nach Anspruch 4 oder 5,
wobei in dem Fall, in dem eine Oberflächentemperatur des zu trocknenden Objekts, das durch das Oberflächentemperaturerkennungsmittel (6) erkannt wird, eine Differenz von nicht weniger als einer vorgegebenen Temperatur nach einem Verstreichen einer vorgegebenen Zeit zeigt, bestimmt wird, dass sich ein Trockenzustand des zu trocknenden Objekts geändert hat, und das Anzeigemittel (8) eine Anzeige für jeden der Bereiche einzeln in Stufen nach der Änderung des Trockenzustands ändert.

7. Entfeuchter nach Anspruch 4 oder 5, ferner umfassend:
Feuchtigkeitserkennungsmittel (4), konfiguriert zur Erkennung von Feuchtigkeit im Raum,
wobei in dem Fall, in dem die Feuchtigkeit im Raum auf eine vorgegebene Feuchtigkeit sinkt, bestimmt wird, dass sich ein Trockenzustand des zu trocknenden Objekts geändert hat, und das Anzeigemittel (8) eine Anzeige für jeden der Bereiche einzeln in Stufen nach der Änderung des Trockenzustands ändert.

8. Entfeuchter nach Anspruch 4 oder 5, ferner umfassend:
Feuchtigkeitserkennungsmittel (4), konfiguriert für die Erkennung von Feuchtigkeit in dem Raum; und
Zeitmessmittel (17), konfiguriert zum Messen einer Zeit, die verstreicht, bis die Feuchtigkeit im Raum auf eine vorgegebene Feuchtigkeit sinkt,
wobei in dem Fall, in dem die Feuchtigkeit im Raum auf die vorgegebene Feuchtigkeit sinkt, bestimmt wird, dass sich ein Trockenzustand des zu trocknenden Objekts geändert hat, und das Anzeigemittel (8) eine Anzeige für jeden der Bereiche einzeln in Stufen nach der Änderung des Trockenzustands ändert, und
wobei eine Zeit, die verstreicht, bis Trocknen abgeschlossen ist, durch das Steuermittel (7) aus der Zeit, die verstreicht, bis die Feuchtigkeit im Raum auf die vorgegebene Feuchtigkeit sinkt, die durch das Zeitmessmittel (17) gemessen wird, und einen vorgegebenen Koeffizienten geschätzt wird, und die Zeit auf dem Anzeigemittel (8) angezeigt wird.

9. Entfeuchter nach einem der Ansprüche 1 bis 8, wobei das Anzeigemittel (8) eine Anzeige unter Verwendung eines Bilds, eines Zeichens, einer Farbe oder einer Kombination davon durchführt.

10. Entfeuchter nach einem der Ansprüche 1 bis 9, wobei das Anzeigemittel (8) eine Anzeige in Stufen durch eine Formänderung in einem Bild, eine Änderung eines Zeichens, eine Änderung eines Tons derselben Anzeigefarbe, einer Änderung auf eine andere Anzeigefarbe oder Blinken einer Anzeige einer Änderung des Trockenzustands des zu trocknenden Objekts ändert.

11. Entfeuchter nach einem der Ansprüche 4 bis 8, ferner umfassend:
Eingabemittel (15) zur Auswahl aus den Gebieten, die an den Gebieten bereitgestellt sind, die an dem Anzeigemittel (8) angegeben sind, wobei das Eingabemittel (15) transparent ist, um Anzeigen auf dem Anzeigemittel (8) durch das Eingabemittel (15) sichtbar zu machen;
wobei das Steuermittel (7) das Windrichtungsänderungsmittel (1) steuert, die Blasrichtung der trockenen Luft in Richtung eines Bereichs in dem Raum hin zu ändern, der durch die Bereiche angezeigt wird, die durch das Eingabemittel (15) gewählt werden.

12. Entfeuchter nach Anspruch 11, wobei das Eingabemittel (15) in der Lage ist, einzeln zwei oder mehr der Gebiete zu wählen.

13. Entfeuchter nach Anspruch 11 oder 12, wobei in dem Fall, in dem mehrere Gebiete ständig angezeigt werden, das Eingabemittel (15) in der Lage ist, die Bereiche durch ständiges Verschieben über die Gebiete zu wählen.

14. Entfeuchter nach einem der Ansprüche 11 bis 13, wobei das Eingabemittel (15) Eingaben von einem Teil der Gebiete annimmt, wobei jedes Gebiet des Teils eine Anzeige enthält, und keine Eingaben von dem anderen Teil der Gebiete annimmt, wobei jedes Gebiet des anderen Teils keine Anzeige enthält.

15. Entfeuchter nach einem der Ansprüche 1 bis 8, ferner umfassend: einen Spezifisches-Gebiet-Wahlschalter (16), konfiguriert zur kollektiven Auswahl der Gebiete,
wobei durch eine Betätigung des Spezifisches-Gebiet-Wahlschalters (16) für den unter den Gebieten, deren Anzahl vorbestimmt ist, Gebiete mit derselben Anzeige in einem vorgegebenen Trockenzustand kollektiv gewählt werden, und
wobei das Steuermittel (7) das Windrichtungsänderungsmittel (1) steuert, um die Blasrichtung der trockenen Luft zu einen Bereich in dem Raum hin zu ändern, der durch die Gebiete angezeigt wird, die kollektiv gewählt werden.

## Revendications

1. Déshumidificateur comprenant :
un moyen de déshumidification (5) conçu pour éliminer l'humidité contenue dans l'air ;
un moyen de soufflage d'air (2) conçu pour aspirer l'air dans une pièce et pour souffler dans la pièce de l'air sec obtenu en faisant en sorte que l'air aspiré traverse le moyen de déshumidification (5) ;
un moyen de changement de direction de vent (1) conçu pour changer une direction de soufflage de l'air sec ; l'ensemble de la zone dans une région vers laquelle le moyen de direction du vent peut effectuer un soufflage de l'air étant une région de balayage divisée en une pluralité de zones ;
un moyen de détection de la température (3) conçu pour détecter une température de l'air de la pièce ;
un moyen de détection de température de surface (6) fixé au moyen de changement de direction du vent (1) et conçu pour détecter des températures de surface dans la pièce dans chacune des zones (201) de la région de balayage (200) selon la direction de soufflage ;
un moyen de contrôle (7) conçu pour contrôler le moyen de déshumidification (5), le moyen de soufflage d'air (2) et le moyen de changement de direction de vent (1) sur la base des résultats de détection du moyen de détection de température (3) et du moyen de détection de température de surface (6) ;
**caractérisé en ce que** le déshumidificateur comprend en outre :
un moyen d'indication (8) muni d'une portion d'indication de zone (9) conçue pour indiquer les zones correspondant aux zones de la pluralité de zones de la région de balayage,
dans lequel il est déterminé, à partir des températures de surface détectées par le moyen de détection de température de surface (6), qu'il y a un objet à sécher, et une position de l'objet à sécher est indiquée sur le moyen d'indication (8) en indiquant une marque d'indication (14) dans chaque zone de la portion d'indication (9) où il est déterminé qu'un objet à sécher est positionné, le fait que l'état de séchage d'un objet à sécher change ou est en cours étant indiqué en changeant la marque d'indication (9).

2. Déshumidificateur selon la revendication 1,
dans lequel la direction de soufflage de l'air sec est changée vers une position où l'objet à sécher se trouve.

3. Déshumidificateur selon la revendication 2,
dans lequel le moyen de contrôle (7) effectue une comparaison entre la température de l'air de la pièce détectée par le moyen de détection de température (3) et les températures de surface détectées par le moyen de détection de température de surface (6) et, dans le cas où une température de surface est inférieure à la température de l'air de la pièce d'une valeur prédéterminée ou plus, le moyen de contrôle (7) détermine qu'il existe un objet à sécher.

4. Déshumidificateur selon la revendication 1, comprenant en outre :
une portion de commande (10) pour la sélection d'un mode de séchage pour le séchage d'un objet à sécher,
le moyen d'indication (8) indiquant une zone où l'objet à sécher est placé lorsque le mode de séchage est sélectionné ;

5. Déshumidificateur selon la revendication 4,
dans lequel le moyen d'indication (8) peut indiquer différentes indications selon la situation pour chacune des zones, et
dans lequel un état de séchage de l'objet à sécher est déterminé à partir d'une température de surface de l'objet à sécher, qui est détectée par le moyen de détection de température de surface (6) et le moyen d'indication (8) change une indication pour chacune des zones selon l'état de séchage.

6. Déshumidificateur selon la revendication 4 ou 5,
dans lequel, dans le cas où une température de surface de l'objet à sécher, qui est détectée par le moyen de détection de température de surface (6), montre une différence non inférieure à une température prédéterminée après un laps de temps prédéterminé, il est déterminé qu'un état de séchage d'un objet à sécher a changé et le moyen d'indication (8) change une indication pour chacune des zones individuellement par étapes selon le changement de l'état de séchage.

7. Déshumidificateur selon la revendication 4 ou 5, comprenant en outre :
un moyen de détection d'humidité (4) conçu pour détecter l'humidité dans la pièce,
dans lequel, dans le cas où l'humidité dans la pièce diminue jusqu'à une humidité prédéterminée, il est déterminé qu'un état de séchage de l'objet à sécher a changé et le moyen d'indication (8) change une indication pour chacune des zones individuellement par étapes selon le changement de l'état de séchage.

8. Déshumidificateur selon la revendication 4 ou 5, comprenant en outre :
un moyen de détection d'humidité (4) conçu pour détecter l'humidité dans la pièce ; et
un moyen de mesure du temps (17) conçu mesurer un temps qui s'écoule jusqu'à ce que l'humidité dans la pièce diminue jusqu'à une humidité prédéterminée,
dans lequel, dans le cas où l'humidité dans la pièce diminue jusqu'à l'humidité prédéterminée, il est déterminé qu'un état de séchage de l'objet à sécher a changé et le moyen d'indication (8) change une indication pour chacune des zones individuellement par étapes selon le change de l'état de séchage, et
dans lequel un temps qui s'écoule jusqu'à ce que le séchage soit terminé est estimé par le moyen de contrôle (7) à partir du temps qui s'écoule jusqu'à ce que l'humidité dans la pièce diminue jusqu'à l'humidité prédéterminée, qui est mesuré par le moyen de mesure du temps (17), et un coefficient prédéterminé, et le temps est indiqué sur le moyen d'indication (8).

9. Déshumidificateur selon l'une des revendications 1 à 8, dans lequel le moyen d'indication (8) effectue l'indication à l'aide d'une image, d'un caractère, d'une couleur ou d'une combinaison de ces éléments.

10. Déshumidificateur selon l'une des revendications 1 à 9, dans lequel le moyen d'indication (8) change une indication par étapes à l'aide d'un changement de forme dans une image, d'un changement de caractère, d'un changement de nuance de la même couleur d'indication, d'un changement vers une couleur d'indication différente, ou d'un clignotement d'une indication selon le changement d'un état de séchage de l'objet à sécher.

11. Déshumidificateur selon l'une des revendications 4 à 8, comprenant en outre :
un moyen d'entrée (15) pour la sélection, à partir des zones prévues sur les zones indiquées sur le moyen d'indication (8), le moyen d'entrée (15) étant transparent afin de permettre aux indications sur le moyen d'indication (8) d'être vues à travers le moyen d'entrée (15) ;
le moyen de contrôle (7) contrôlant le moyen de changement de direction du vent (1) afin de changer la direction de soufflage de l'air sec en direction d'une région dans la pièce indiquée par les zones sélectionnées par le moyen d'entrée (15).

12. Déshumidificateur selon la revendication 11, dans lequel le moyen d'entrée (15) est capable de sélectionner individuellement deux zones ou plus.

13. Déshumidificateur selon la revendication 11 ou 12, dans lequel, dans le cas où la pluralité de zones sont indiquées en continu, le moyen d'entrée (15) est capable de sélectionner les zones par un glissement continu sur les zones.

14. Déshumidificateur selon l'une des revendications 11 à 13, dans lequel le moyen d'entrée (15) accepte une entrée provenant d'une partie des zones, chaque zone de la partie comprenant une indication, et n'accepte pas d'entrée provenant de l'autre partie des zones, chaque zone de l'autre partie ne comprenant aucune indication.

15. Déshumidificateur selon l'une des revendications 1 à 8, comprenant en outre :
un commutateur de sélection de zone spécifique (16) conçu pour sélectionner les zones collectivement,
dans lequel, grâce à l'actionnement du commutateur de sélection de zone spécifique (16), parmi les zones, dont le nombre est prédéterminé, les zones ayant la même indication dans un état de séchage prédéterminé sont sélectionnées collectivement, et
dans lequel le moyen de contrôle (7) contrôle le moyen de changement de direction du vent (1) pour changer la direction de soufflage de l'air sec en direction d'une région dans la pièce indiquée par les zones sélectionnées collectivement.
